# EUROPEAN PATENT APPLICATION

(11) **EP 3 683 410 A2**
(43) Date of publication of application: **22.07.2020**
(21) Application number: 19216976.1
(22) Date of filing: 17.12.2019
(51) Int. Cl.: F01D 21/04

(54) **DETECTING AN OBJECT IMPACT EVENT**

(30) Priority: 18.01.2019 GB 201900693
(71) Applicant: Rolls-Royce plc, London N1 9FX (GB)
(72) Inventor: Naylor, Philip, Derby, Derbyshire DE24 8BJ (GB); Sekaran, Paulas, Derby, Derbyshire DE24 8BJ (GB)
(74) Representative: Rolls-Royce plc

(57) **Abstract**

A rotor assembly (100) for a gas turbine engine (10). The rotor assembly (100) comprising: a rotor (102) comprising a plurality of rotor blades (104), wherein the rotor (102) is arranged to rotate about an axis of rotation (110); a sensor (112) arranged to measure a rotational signal (200; 202) indicative of the rotational speed of the rotor (102) at a measurement point on the rotor (102); and a processor (118) in communication with the sensor (112). The processor (118) is arranged to receive the rotational signal (200; 202) and derive a rotor impact signal based on an offset in the measured rotational speed of the rotor (102) at the measurement point. The rotor (102) has an axial length (L) parallel to the axis of rotation (110), and the sensing apparatus (112) is arranged to measure the rotational speed of the rotor (102) at a measurement point (114) along the axial length of the rotor, the measurement point corresponding to a position at or near an antinode of a torsional oscillation of the rotor resulting from an impact event. A method (300) of detecting an object impact event on a rotor (102) of a rotor assembly (100) of a gas turbine engine (10) is also disclosed.

## Description

### FIELD OF THE DISCLOSURE

The present disclosure relates to a rotor assembly for a gas turbine engine and a method of detecting an object impact event on a rotor of a gas turbine engine.

### BACKGROUND

Damage to the rotor blades within a gas turbine engine can be caused by debris ingested by the engine during operation. Such ingestion incidents may be caused by birds or by any other debris that may be referred to as foreign object damage or FOD events. Other object impact events may occur if parts of the engine itself become released into the gas flow path. If a FOD or other object impact event occurs it is important for that damage to be detected in order to provide a prompt for maintenance and for repairs to be made.

Known approaches involve the detection of changes in the operation of the gas turbine engine resulting from damaged caused by a FOD event. An engine may need to be taken out of service for more detailed inspection and repair if potential damage is detected during its operation.

A known method of detecting rotor blade damage involves the detection of a change in the centre of balance of the fan assembly of the engine. Damage to the fan blades can result in the fan rotor orbiting asymmetrically. This can be detected by measurement of radial motion of a shaft carrying the rotor or by detecting vibrations transmitted from the shaft through its mounting bearings. Vibration analysis such as this can be based on radial vibrations measured by a vibration sensor within the gas turbine engine (e.g. on an outer casing in which the rotor blade is contained).

Other known methods involve the direct detection of ingestion of foreign objects into the intake of a gas turbine engine. This can be done using various methods, including an electrostatic probe or camera. Other known methods include using a camera to detect whether part of a rotor blade has gone into vibration or resonance as a result of a FOD event.

There are a number of drawbacks associated with known FOD detection methods. Foreign object ingestion events may cause damage that is not immediately detectable, and only becomes apparent once it propagates into a more damaged state. Damage may therefore spread through the engine until it reaches a level at which it is detected. Any delay in detection may lead to a larger number of components needing repair or replacement, and may lead to an unexpected failure of the engine.

In some cases damage to a rotor blade may be difficult to detect, even during offline inspection. Visual inspection may not be sufficient to identify damage. This may be the case for all types of rotor blades, but may be particularly problematic in the case of composite fan blades where delamination caused by a FOD event causes little or no visual change.

### SUMMARY

The present disclosure provides a rotor assembly for a gas turbine engine, and a method of detecting an object impact event on a rotor of a rotor assembly of a gas turbine engine, as set out in the appended claims.

According to a first aspect there is provided a rotor assembly for a gas turbine engine comprising: a rotor comprising a plurality of rotor blades, wherein the rotor is arranged to rotate about an axis of rotation; a sensing apparatus arranged to measure a rotational signal indicative of the rotational speed of the rotor at a measurement point on the rotor; and a processor in communication with the sensing apparatus, the processor arranged to receive the rotational signal and derive a rotor impact signal based on an offset in the measured rotational speed of the rotor at the measurement point, wherein the rotor has an axial length (L) parallel to the axis of rotation, and wherein the sensing apparatus is arranged to measure the rotational speed of the rotor at a measurement point along the axial length of the rotor, the measurement point corresponding to a position at or near an antinode of a torsional oscillation of the rotor resulting from an impact event.

The rotor assembly of the present disclosure may allow the occurrence of an impact event to be detected independently of detecting any damage to the engine. This can be useful in providing an early warning of a potential cause of damage, rather than detecting the effect of such damage once it has reached a detectable level or propagated through other engine components. The rotor impact signal may provide suitable advance warning of potential damage having occurred. Appropriate action, such as further monitoring or inspection, can then be carried out to avoid unplanned maintenance or engine failure.

The offset in the rotational speed of the rotor may be indicative of an offset in the rotation of the rotor at different points along its length.

The rotational offset may be caused by a twisting of the rotor in a portion of its length between the rotor blades and the measurement point.

The rotor blades may be disposed in a rotor blade plane normal to the axis of rotation. The measurement point may be at a point along the axial length of the rotor that lies in the rotor blade plane.

Additionally or alternatively, the measurement point may be at a point along the axial length of the rotor spaced apart from the rotor blade plane. The measurement point may be spaced apart from the rotor blade plane a distance corresponding to a position away from a node of a torsional oscillation caused by an impact event.

The processor may be arranged to perform a comparison of the measured rotation of the rotor, at the measurement point, to one or more evaluation parameters to determine the offset in the rotational speed of the rotor.

The one or more evaluation parameters may include any one or more of:
a) a predefined expected rotation, or variation in rotation, of the rotor at the measurement point during normal running conditions in which no rotor impact event occurs;
b) a comparison value derived from data associated with the rotation of the rotor over an evaluation time period in which the rotation of the rotor is measured by the sensing apparatus. The processor may be arranged to determine the rotational offset based on the difference between the rotation of the rotor at one or more measurement times within the evaluation time period and the comparison value. The comparison value may be an average speed of rotation of the rotor over the evaluation time period; and
c) the rotation of the rotor at a reference point, the reference point being a point spaced apart along the axial length of the rotor from the measurement point. The rotor assembly may further comprise a reference sensing apparatus in communication with the processor, the reference sensing apparatus may be arranged to measure a reference rotational signal at the reference point indicative of the rotation of the rotor at the reference point.

The rotational signal may be a periodically varying signal. The frequency of the rotational signal may be proportional to the rotational speed of the rotor. The processor may be arranged to derive the rotor impact signal based on the wavelength of the rotational signal measured by the sensing apparatus.

The processor may be arranged to derive the rotor impact signal based on reference points of the rotational signal measured by the sensing apparatus. The reference points may be zero crossings.

The processor may be arranged to derive the rotor impact signal based on a variation in a parameter of the periodic rotational signal over an evaluation time period during which the rotational signal is measured. The parameter may be any one or more of: a period of the rotational signal, a time interval between reference points of the rotation signal or a relative position of one or more reference points of the rotational signal.

The processor may be arranged to perform a comparison with an expected parameter of the rotational signal in order to determine a variation in the parameter of the rotational signal measured by the sensing apparatus. The expected parameter may be determined according to any one or more of:
a) a predefined expected period, reference point time interval or reference point position, of the rotational signal during normal running conditions;
b) a derived period, reference point time interval or zero crossing position of the measured rotational signal over the evaluation time, wherein the derived period may be an average period over the evaluation time; and
c) the period, reference point time interval or reference point position of a reference rotational signal measured by a reference sensing apparatus arranged to measure a reference rotational signal at a reference point along the rotor spaced apart from the sensing apparatus.

Deriving the rotor impact signal by the processor may comprise calculating a frequency domain representation of the rotational signal.

Deriving the rotor impact signal by the processor may further comprise comparing the relative strength of a first frequency component of the frequency domain representation of the rotational signal to a second frequency component of the frequency domain representation of the rotational signal.

Deriving the rotor impact signal by the processor may comprise performing a threshold comparison, wherein the rotor impact signal is output if the rotational offset exceeds a threshold rotational offset.

The sensing apparatus may comprise a phonic wheel coupled to the rotor and a speed sensor in a stationary alignment relative to the phonic wheel. The speed sensor may be arranged to measure a voltage that is proportional to the clearance between the speed sensor and the phonic wheel.

The sensing apparatus may be a rotor blade counting sensor arranged to measure the rotational signal based on a number of rotor blades passing a fixed point in a defined period of time.

According to a second aspect there is provided a method of detecting an object impact event on a rotor of a rotor assembly of a gas turbine engine, the method comprising: measuring a rotational signal indicative of the rotational speed of a rotor comprising a plurality of rotor blades, the rotational signal being measured at a measurement point on the rotor; and deriving a rotor impact signal based on an offset in the measured rotational speed of the rotor, the rotor being arranged to rotate about an axis of rotation and the rotor has an axial length (L) parallel to the axis of rotation, and wherein measuring the rotational signal comprises measuring the rotational speed of the rotor at a measurement point along the axial length of the rotor, the measurement point corresponding to a position at or near an antinode of a torsional oscillation of the rotor resulting from an impact event.

The offset in the rotational speed of the rotor may be indicative of an offset in the rotation of the rotor at different points along its length.

The rotational offset may be caused by a twisting of the rotor in a portion of its length between the rotor blades and the measurement point.

The rotor blades may be disposed in a rotor blade plane normal to the axis of rotation. The measurement point may be at a point along the axial length of the rotor that lies in the rotor blade plane.

Additionally or alternatively, the measurement point may be at a point along the axial length of the rotor spaced apart from the rotor blade plane. The measurement point may be spaced apart from the rotor blade plane a distance corresponding to a position away from a node of a torsional oscillation caused by an impact event.

Deriving the rotor impact signal may comprise performing a comparison of the rotation of the rotor, at the measurement point, to one or more evaluation parameters to determine the offset in the rotation.

The one or more evaluation parameters may include any one or more of:
a) a predefined expected rotation, or variation in rotation, of the rotor at the measurement point during normal running conditions in which no rotor impact event occurs;
b) a comparison value derived from data associated with the rotation of the rotor measured over an evaluation time period, wherein the rotational offset is determined based on the difference between the rotation of the rotor at one or more measurement times within the evaluation time period and the comparison value. The comparison value may be an average speed of rotation of the rotor over the evaluation time period; and
c) the rotation of the rotor at a reference point, the reference point being a point spaced apart along the length of the rotor from the measurement point.

The rotational signal may be a periodically varying signal, the frequency of the rotational signal being proportional to the rotational speed of the rotor.

The rotor impact signal may be derived based on the wavelength of the rotational signal.

The rotor impact signal may be derived based on reference points of the rotational signal. The reference points may be zero crossing points.

Deriving the rotor impact signal may comprise determining a variation in a parameter of the periodic rotational signal over an evaluation time period during which the rotational signal is measured. The parameter may be any one or more of: a period of the rotational signal, a reference point time interval between reference points of the rotation signal or a relative position of one or more reference points of the measured rotational signal.

Deriving the rotor impact signal may comprise performing a comparison to an expected parameter of the rotational signal in order to determine a variation in the parameter of the measured rotational signal. The expected parameter may be determined according to any one or more of:
a) a predefined expected period, reference point time interval or reference point position, of the rotational signal during normal running conditions;
b) a derived period, reference point time interval or reference point position of the measured rotational signal over the evaluation time period, wherein the derived period may be an average period; and
c) the period, reference point time interval or reference point position of a reference rotational signal measured at a point along the rotor spaced apart from the measurement point.

Deriving the rotor impact signal may comprise calculating a frequency domain representation of the rotational signal.

Deriving the rotor impact signal may further comprise comparing the relative strength of a first frequency component of the frequency domain representation of the rotational signal to a second component of the frequency domain representation of the rotational signal.

Deriving the rotor impact signal may comprise performing a threshold comparison. The method may further comprise outputting the rotor impact signal if the rotational offset exceeds a threshold rotational offset.

Any of the features of the statements above may be used in combination with either or both of the first and second aspects.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core. Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox is a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. A higher gear ratio may be more suited to "planetary" style gearbox. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds). The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** is a schematic view of a rotor assembly used in the gas turbine engine;
**Figure 5** is another schematic view of a rotor assembly used in the gas turbine engine according to another embodiment;
**Figure 6a** shows a rotational signal measured by a sensing apparatus of the rotor assembly during a time period in which no impact event occurs;
**Figure 6b** shows a rotational signal measured by a sensing apparatus of the rotor assembly during a time period in which an impact event occurs;
**Figure 6c** shows a close up view of region X marked in Figure 6b;
**Figure 7a** shows a comparison between a measured rotational signal and an expected rotational signal;
**Figure 7b** shows a close up view of region Y marked in Figure 7b;
**Figure 8** shows a rotational signal transformed into the frequency domain;
**Figure 9** shows a method of detecting an object impact event on a rotor blade of a rotor of a rotor assembly of a gas turbine engine; and
**Figure 10** shows another embodiment of the method shown in Figure 9.

### DETAILED DESCRIPTION

Aspects and embodiments of the present disclosure will now be discussed with reference to the accompanying figures. Further aspects and embodiments will be apparent to those skilled in the art.

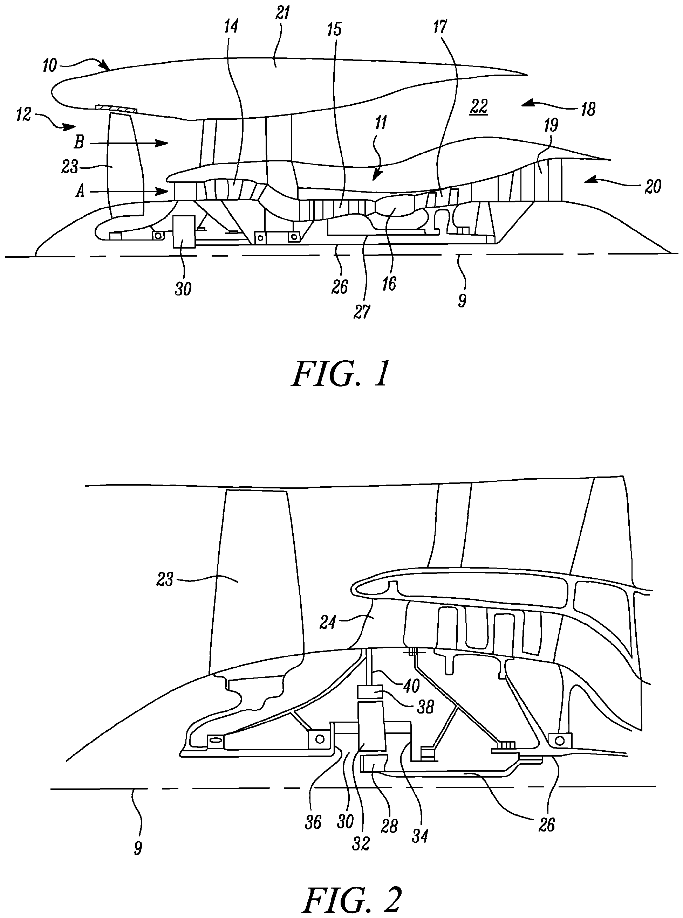

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Figure 2****.** The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

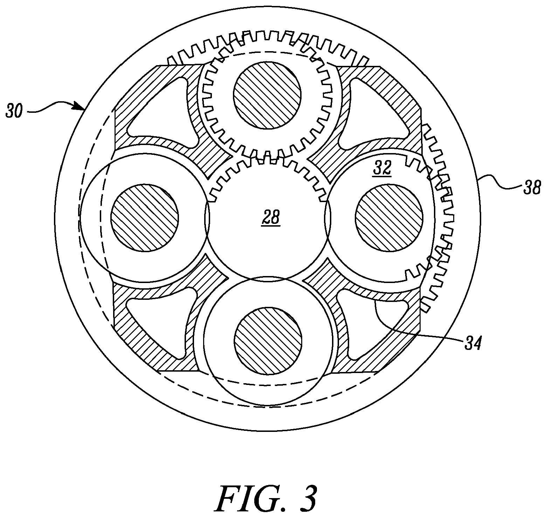

The epicyclic gearbox 30 is shown by way of example in greater detail in **Figure 3**. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

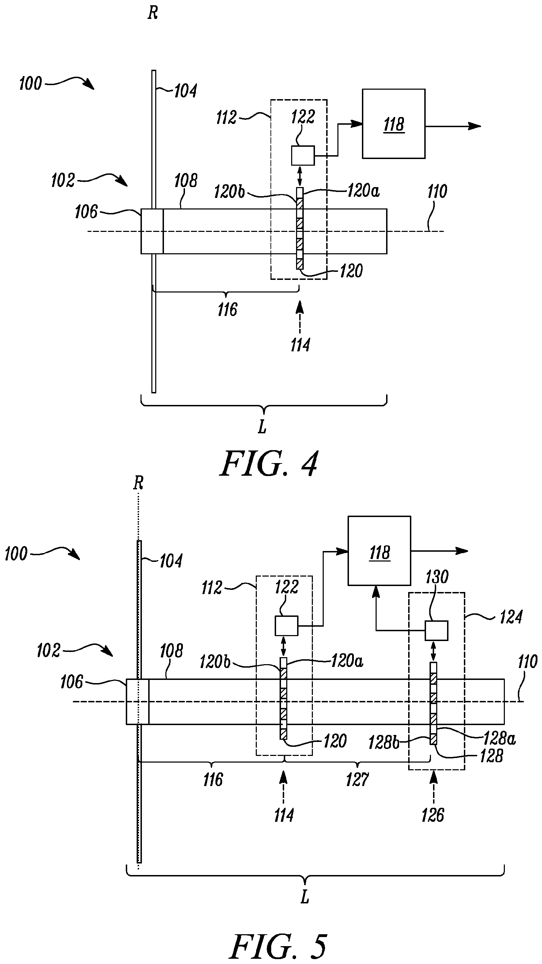

A rotor assembly 100 that may be used in the gas turbine engine 10 is illustrated schematically in **Figure 4****.** The rotor assembly 100 comprises a rotor 102 comprising a plurality of rotor blades 104 and a shaft 108. The plurality of rotor blades 104 are mounted or coupled (directly or indirectly) to the shaft 108. In the present embodiment, the rotor blades 104 extend radially from a central hub 106 to form an annular array. The central hub 106 may be formed integrally with the shaft 108, or may be a separate component mounted to it. In other embodiments, the rotor blades may be coupled to the shaft via a disc or drum that is attached to the shaft. The rotor 102 is arranged to rotate about an axis of rotation 110. The axis of rotation 110 may correspond to the principal rotation axis 9 of the gas turbine engine 10.

The rotor 102 may provide the fan 23 of the gas turbine engine 10, with the rotor blades forming fan blades. In other embodiments, the rotor 102 may be any other arrangement of rotor blades provided in the gas turbine engine that are rotated by a rotating shaft. It may, for example, be the rotor of a compressor or turbine provided in the gas turbine engine.

The rotor assembly 100 further comprises a sensing apparatus 112 arranged to measure a rotational signal indicative of the rotational speed of the rotor 102. As illustrated in Figure 4, the rotor 102 has an axial length (labelled L) that is parallel to the axis of rotation 110. The sensing apparatus 112 is arranged to measure the rotational speed of the rotor 102 at a measurement point 114 along its axial length.

The rotor assembly 100 further comprises a processor 118 in communication with the sensing apparatus 112. The processor 118 is arranged to receive the rotational signal measured by the sensing apparatus 112. The processor 118 is arranged to derive a rotor impact signal based on an offset in the rotational speed of the rotor 102 at the measurement point. The rotor impact signal provides an indication that a mass (e.g. a foreign object ingested by the engine or part of the engine itself that has become released into the gas flow path) has collided with the rotor 102 that may have resulted in damage to one of the rotor blades 104 or other associated components of the gas turbine engine. The rotor impact signal may act as a prompt to perform an inspection of the gas turbine engine 10 to check whether any damage resulted from the impact event.

The rotor impact signal may be transmitted by the processor 118 to a control system of the gas turbine engine 10 or aircraft to which it is mounted. The control system may be configured to generate an inspection prompt signal which may be displayed on board the aircraft or transmitted to a remote monitoring system. Inspection of the gas turbine engine 10 can then be performed to determine if any damage was caused by the detected impact event.

In some embodiments, the control system may be configured to receive the impact signal and generate an engine control signal. The engine control signal may be presented on a display to act as a command to decelerate the gas turbine engine 10 or may cause the controller to directly decelerate the gas turbine engine 10.

By basing the determination of the rotor impact signal on an offset in the rotation of the rotor an improved detection of impact events may be provided. In some cases, object impact events do not cause damage that can be detected immediately using other damage detection systems. Damage may only become apparent once it has propagated through the engine and becomes detectable by monitoring vibration or rotor balance signals, or is apparent from reduced engine performance or failure.

The present disclosure provides a system by which the occurrence of an impact event is detected independently of detecting any damage to the engine. This can be useful in providing an early warning of a potential cause of damage, rather than detecting the effect of such damage.

The rotor impact signal may provide suitable advanced warning of potential damage having occurred so that suitable action, such as further monitoring or inspection, can be carried out. By providing an indication of an impact event, an advanced warning of possible engine failure can be provided so that what would otherwise have been unplanned maintenance can become planned maintenance.

The rotor assembly 100 may be one in which the rotor blades 104 are formed at least partly from a composite material (e.g. composite fan blades). The rotor impact signal may be useful in this case because a foreign object collision may cause invisible, or difficult to detect, delamination of the rotor blades. A physical inspection of the rotor blades may not therefore detect any damage, even though an impact had in fact occurred resulting in damage that will later become apparent. In other embodiments, the rotor assembly 100 may include rotor blades made of any material, and the present disclosure in not limited in application to only composite rotor blades.

The measured offset in rotation may correspond to an offset or variation away from rotation of the rotor that would be measured during normal running conditions (i.e. where no object impact occurs). The impact of an object against the rotor 102 (e.g. against one of the plurality of rotor blades 104) may take energy out of the rotor and cause a change in the speed of its rotation. By detecting this change in rotation of the rotor via an indication that an impact event has occurred can be derived.

The measured offset in the rotational speed of the rotor 102 may be caused by a twisting of the rotor 102 about the axis of rotation 110. This twisting is caused by the rotational elasticity of the rotor 102 allowing different points along its axial length to have a rotational offset with respect to one another. If a foreign object enters the gas turbine engine and impacts the rotor blades 104 (or other part of the rotor), a torsional force will be applied to the rotor 102. This torsional force will result in a twisting of the rotor 102 about the axis of rotation 110 and an offset in the rotational speed of the rotor 102 (e.g. an offset from normal running rotation) at different points along its axial length. For a lightly damped system the subsequent torsional oscillation of the rotor may have an effect on the rotational signal and help to allow the rotor impact signal to be derived. Detection of an offset in the rotational speed at the measurement point 114 therefore provides an indication that an object has struck the rotor blades (104) and that resulting damage may have occurred.

For a freely rotating rotor 102 with significant axial length and torsional elasticity, a torsional oscillation within the rotor will result from an impact event. The torsional oscillation may be an oscillating level of torsion or twist along the length of the rotor 102 caused by an impact event. The torsional oscillation will have nodes and antinodes along the rotor axial length (in terms of degrees of twist). The antinodes may correspond to a point of the greatest degree of twist, with the nodes corresponding to the lowest degree of twist. The measurement point 114 may correspond to the position of an antinode (or near to an antinode) of the torsional oscillation. By measuring the rotational signal at an antinode a more effective measurement of the torsional oscillation may be provided, rather than measuring the rotation of the rotor 102 at the position of a node. In other embodiments, measurements may be taken at points away from an antinode, in which case a smaller but still detectable level of variation in rotational speed may be present.

The rotational speed of the rotor 102 may be measured at a point corresponding to the torsional antinode associated with a frequency of torsional oscillation that is the result of an impact event. The nodes and antinodes may be at different locations along the axial length of the rotor 102 depending on the mode of torsional oscillation, which relates to the oscillation frequency. The measurement point may be positioned at the point of an antinode of a torsional oscillation resulting from an impact event, rather than other modes of torsional oscillation that may be present.

So as to correspond to the position of an antinode, the measurement point 114 may be at a point along the axial length of the rotor 102 that lies in a rotor blade plane (labelled R in Figure 4). As illustrated in Figure 4, the rotor blade plane is a plane that is normal to the axis of rotation 110 and in which the plurality of rotor blades 104 are disposed. In the case of the gas turbine fan of the described embodiment, the plurality of rotor blades 104 are at the distal end of the rotor 102, and so are likely to be at an antinode of the torsional oscillation.

Additionally or alternatively, the measurement point 114 may be another point along the axial length of the rotor spaced apart from the rotor blade plane. In this case, the measurement point may be a point along the length of the shaft 108 spaced apart from the plane of the rotor blades.

The processor 118 may be arranged to perform a comparison of the rotation of the rotor 102 at the measurement point 114, measured over an evaluation time period, to one or more evaluation parameters to determine the offset in the rotation from which the impact signal is derived. The evaluation parameter or parameters may be an expected rotation of the rotor. The evaluation parameter or parameters may be any suitable value or values derived from data associated with the evaluation time period relating to the rotation of the rotor. This data may be data measured over the evaluation time period (e.g. a measured average rotational speed or other derived value) or predetermined data (e.g. expected speed determined from a model of expected behaviour). A combination of predetermined and measured data may also be used.

In one embodiment, the expected rotation may be determined according to a predefined expected rotation of the rotor 102 at the measurement point 114 during normal running conditions. This expected rotation may correspond to that which would be expected should the rotor 102 be rotating during the evaluation time under normal operating conditions (i.e. with no impact event occurring). In some cases, normal operation would result in a variation of the rotation of the rotor 102 over the evaluation time period. For example, the rotation of the rotor 102 might be expected to vary if the evaluation time period covers a time frame in which the gas turbine engine is being accelerated or decelerated (e.g. during landing or take off). The expected rotation may therefore also include an expected varying rotation over the evaluation time period relative to which the rotational offset may be found. In some embodiments, the expected rotation may be determined from a model or record of normal behaviour constructed from real engine operation.

In other embodiments, the expected rotation may additionally or alternatively be determined according to a comparison value derived from data associated with the rotation of the rotor 102 over the evaluation time period. The comparison value may be the average speed of rotation of the rotor 102 over the evaluation time period. In this embodiment, the processor 118 may be arranged to determine the rotational offset based on the difference between the rotation of the rotor 102 at one or more measurement times within the evaluation time period and the average rotation of the rotor 102 during the evaluation time period. In other embodiments, another value or values derived from the rotational signal measured by the sensing apparatus over the evaluation time period may be used for the comparison.

In yet other embodiments, the expected rotation may additionally or alternatively be determined according to the rotation of the rotor 102 at a reference point (e.g. a second measurement point). The reference point may be spaced apart from the measurement point 114 along the axial length of the rotor 102. In this embodiment, the processor 118 may therefore be arranged to determine the offset in rotation between different points along the axial length of the rotor 102 to determine the offset in rotation.

The rotation of the rotor 102 at the reference point may be determined by a reference rotational signal measured by a reference sensing apparatus provided in addition to the sensing apparatus 112. The reference sensing apparatus is arranged to measure a reference rotational signal at a point along the rotor 102 spaced apart from the sensing apparatus 112. An example of an embodiment in which the rotor assembly 100 further comprises a reference sensing apparatus is shown in **Figure 5****.** In this embodiment, a reference sensing apparatus 124 is arranged to measure a reference signal indicative of the rotational speed of the rotor 102 at a reference point 126. The reference point 126 is spaced apart along the shaft 108 from the measurement point 114 by a distance 127 along the shaft 108. In the described embodiment, the reference point 126 is further away from the rotor blade plane R along the shaft 108 compared to the measurement point 114. In other embodiments, the reference point 126 may be at any other suitable point along the length of the rotor 102. It may, for example, be between the rotor blade plane and the measurement point 114.

The reference sensing apparatus 124 may also be in communication with the processor 118 as shown in Figure 5. This may allow the rotation of the rotor 102 to be compared at two different points spaced apart along its axial length. In the event of a foreign object impact, torsional oscillations within the rotor will cause an offset in the rotation between the two measured rotational signals as discussed above. The reference sensing apparatus 124 may be of the same type as the sensing apparatus 112, or may be a different type as will be described in more detail later.

The rotational signal measured by either the sensing apparatus 112 or the reference sensing apparatus 124 may be a periodically varying signal. The frequency of the rotational signal may be proportional to the rotational speed of the rotor 102 at the measurement point 114 (or reference point 126).

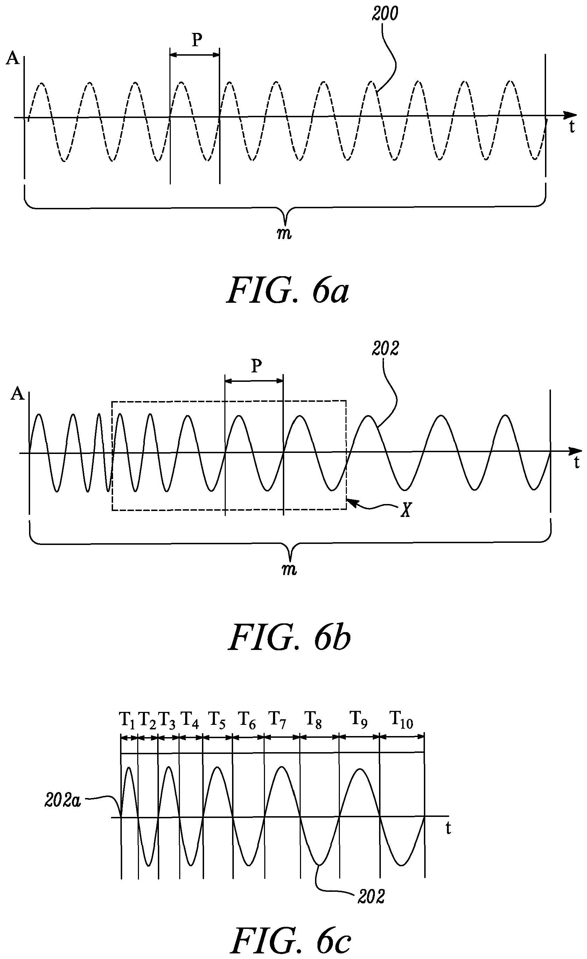

An example of a rotational signal 200 provided by the sensing apparatus 112 is shown in Figure 6a. **Figure 6a** shows a plot of the amplitude, A, of the signal measured by the sensing apparatus 112 against time, t. In this example, the rotational signal 200 varies over a time, t, between a maximum and minimum value and has a period, P. The rotational signal 200 is shown for an evaluation period, m. Figure 6a shows an example of a rotational signal produced by rotation of the rotor 102 at a constant speed during normal running conditions (e.g. during an evaluation time period in which no impact on the rotor 102 occurs). In that case, there is no change in the torsional force acting on the rotor 102. The rotational signal 200 therefore has a constant period P throughout the evaluation time m.

A second example of a rotational signal 202 provided by the sensing apparatus 112 is shown in Figure 6b. **Figure 6b** again shows a plot of the amplitude, A, of the signal measured by the sensing apparatus 112 against time, t. In this example, the rotational signal 202 has a period P that varies at different points over the duration of the evaluation time m. The rotational signal 202 shown in Figure 6b is an example of a rotational signal measured by the sensing apparatus 112 resulting from an impact of an object against the rotor 102.

The processor may be arranged to derive the rotor impact signal based on the wavelength of the rotational signal 200, 202. As can be seen in Figures 6a and 6b, a change in the wavelength of the rotational signal may be indicative of a rotor impact event occurring caused by an offset in rotation of the rotor 102 at the measurement point 114. A change in wavelength of the rotational signal 200, 202 may be determined using one or more of a number of different methods as described below.

The processor 118 may be arranged to derive the rotor impact signal based on zero crossings of the rotational signal measured by the sensing apparatus 112. Basing the determination of the impact signal on zero crossings of the rotational signal may provide a convenient method of measuring a change in the wavelength that is indicative of the occurrence of an impact on the rotor blade. It may provide a convenient method of determination when combined with the use of an inductive transducer to measure the rotational speed of the rotor (e.g. using a phonic wheel as described later).

Other methods of determining the impact signal based on different parameters of the rotational signal may be used. For example, in some embodiments, the rotational signal may be far away from zero such that the rotational signal does not have any zero amplitude points. A background offset may therefore be applied to the signals shown in the figures. In such embodiments, other suitable reference points other than zero crossing points may be used. For example, a background or DC offset crossing may be used.

The processor 118 may be arranged to derive the rotor impact signal based on a variation of a parameter or characteristic of the periodic rotational signal. Variation of the parameter over the evaluation time period during which the rotational signal is measured may be used to detect an impact event. The parameter used may be any one or more of: a period of the rotational signal, a zero crossing time interval between zero crossings of the rotation signal or a relative position (e.g. a phase difference or offset from zero amplitude) of one or more zero crossings of the rotational signal. Other parameters may be used.

The processor 118 may be arranged to perform a comparison to an expected parameter of the rotational signal in order to determine a variation in the parameter of the rotational signal. The expected parameter may correspond to the expected rotation of the rotor 102 as described above. The expected parameter value may therefore be determined according to any one or more of:
a) a predefined expected period, zero crossing time interval or zero crossing position, of the rotational signal 200, 202 during normal running conditions;
b) derived period, zero crossing time interval or zero crossing position of the measured rotational signal 200, 202 over the evaluation time period, wherein the derived period may be an average period; and
c) the period, zero crossing time interval or zero crossing position of a reference rotational signal measured by the reference sensing apparatus 124.

For example, the processor 118 may be arranged to determine the variation in the period of the rotational signal by measuring the time internal between zero crossings of the rotational signal 202. An example of this can be seen in **Figure 6c****,** which shows a close up of part of the rotational signal 202 shown in Figure 6b. The processor 118 may be arranged to determine the time interval T₁, T₂ etc. between one or more zero crossings 202a of the rotational signal occurring within the evaluation period m.

For example, the interval between one or more pairs of zero crossings may be compared to an expected zero crossing interval. The expected interval may be derived as described above. The expected zero crossing interval may therefore be determined according to any one or more of: a) a predefined expected zero crossing time interval, or expected variation in zero crossing time internal during the evaluation time, during normal running conditions; b) an average zero crossing time interval of the measured rotational signal over the evaluation time period; and c) the zero crossing interval of a reference rotational signal measured by the reference sensing apparatus 124.

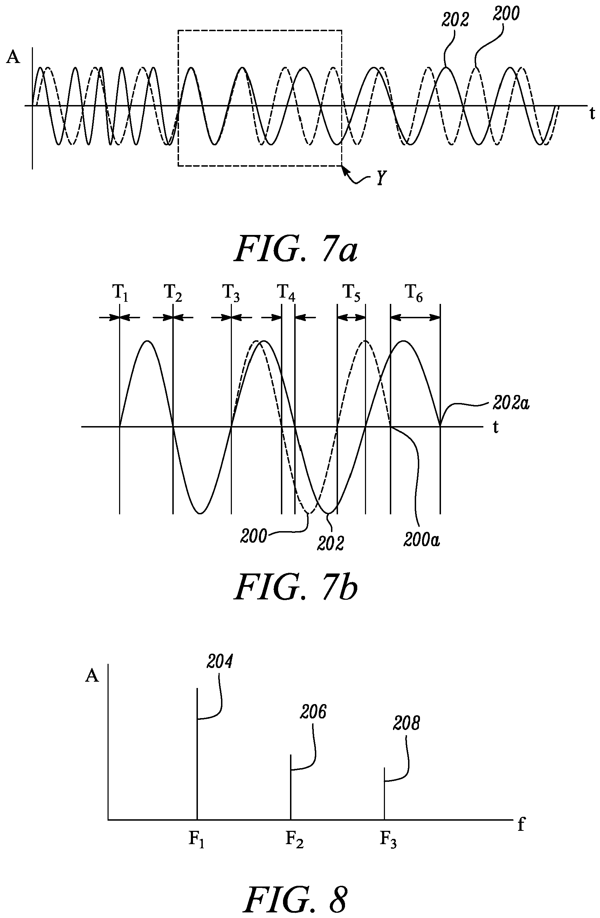

The processor 118 may be arranged to compare a relative position of a zero crossing of the measured rotational signal with that of an expected rotational signal. An example of this is shown in **Figures 7a and 7b****.** Rather than comparing the time interval between zero crossings of the measured rotational signal 202, the processor 118 may be arranged to compare a relative position of a zero crossing 202a of the measured rotational signal with a corresponding zero crossing 200a of an expected rotational signal 200. The expected zero crossing position may be derived as described above (e.g. predefined model values, comparison to an average or other derived value or to a reference signal). In the embodiment shown in **Figure 7a****,** the rotational signal 200 shown in Figure 6a is used as the expected rotational signal.

In other embodiments, any other suitable method may be implemented by the processor 118 to determine the rotational offset from the rotational signal measured by the sensing apparatus 112. In other embodiments, for example, deriving the rotor impact signal by the processor 118 may comprise calculating a frequency domain representation of the rotational signal. In this embodiment, the signal measured by the sensing apparatus 112 may be analysed in the frequency domain, rather than in the time domain as described in the embodiments above. A transformation from the time domain to the frequency domain may be performed by the processor using any suitable method (e.g. using a suitable Fourier transform algorithm).

An example of the rotational signal measured by the sensing apparatus 112 after being transformed to the frequency domain by the processor is shown schematically in Figure 8. **Figure 8** shows a plot of the amplitude, A, of the frequency domain representation of the rotational signal from the sensing apparatus 112 against frequency, f. In the frequency domain, the rotational signal from the sensing apparatus 112 can be seen to include a first frequency component 204 at a frequency of F₁ that corresponds to the rotation of the rotor under normal running conditions. One or more additional or secondary frequency components or sidebands 206, 208 at frequencies F₂ and F₃ may also be present. The relative strength of these additional frequency components 206, 208 may be used to determine an offset in rotation of the rotor caused by twisting after a rotor impact event. During an evaluation time where no impact occurs to the rotor, only the first frequency component 204 (and small levels of additional frequency components) may be present. In order to derive the rotor impact signal, the processor 118 may be arranged to compare the relative strength of the first frequency component 204 of the frequency domain representation of the rotational signal to the strength of a second frequency component 206, 208. If the second frequency component 206, 208 has a relative strength exceeding a threshold proportion of the first frequency component 204 the processor 118 may be arranged to output the rotor impact signal to indicate the likelihood that an impact event has occurred.

In any of the described embodiments, deriving the rotor impact signal by the processor 118 may comprise performing a threshold comparison. The rotor impact indication signal may be output if the determined rotational offset exceeds a preset threshold rotational offset. This may allow for small offsets in rotation during normal running conditions that are not the result of an impact event (or result from an insignificant impact) on the rotor. For example, the rotor impact indication may be output by the processor if the difference in the measured rotational signal compared to the expected rotational signal exceeds a preset threshold.

The threshold may be set to a suitable level to filter out false positive indications of an impact. For example, the variation in time interval between zero crossings of the measured signal may need to vary by a preset proportion of the expected zero crossing interval (e.g. the average) before the impact indication is output by the processor 118. In other embodiments, the variation of any of the other parameters (zero crossing time interval, period or zero crossing position) maybe compared to a threshold value of that parameter. If the threshold is exceeded, the impact indication may be output by the processor.

The sensing apparatus sensor 112 and the reference sensing apparatus 124 already introduced may take a number of different forms. Referring again to Figures 4 and 5, the sensing apparatus 112 may comprise a phonic wheel 120 coupled to the rotor 102 at the measurement point 114 and a speed sensor 122 in a stationary alignment relative to the phonic wheel 120. The phonic wheel may be mounted so that it is at or near to the plane of the rotor blades (e.g. to the central hub 106) or it may be mounted to the shaft 108 as shown in Figure 4 at a distance 116 from the rotor blade 104. The phonic wheel may be mounted at or near to the position of an antinode or antinodes of torsional oscillation modes of interest as described above.

The phonic wheel 120 may comprise a peripheral array of protrusions or teeth 120a with circumferential spaces 120b between them. The speed sensor 122 is mounted relative to the phonic wheel 120 such that a clearance gap is formed between a sensing tip of the speed sensor 122 and the adjacent surface of the teeth 120a of the phonic wheel 120. The speed sensor 122 may be a proximity sensor arranged to provide a rotational signal having an amplitude dependent on the clearance gap.

The rotational signal may vary between a first value at which the sensing tip is aligned with one of the teeth 120a and a second value 120b at which the sensing tip is aligned with one of the spaces 120b between the teeth. Rotation of the rotor 102 causes a corresponding rotation of the phonic wheel 120 that results in a periodic variation in the signal measured by the speed sensor 122. The period of the signal is proportional to the speed of rotation of the rotor 102. If the teeth 120a are equally spaced around the circumference of the phonic wheel 120 a constant rotation of the rotor will result in a rotational signal with a constant period (e.g. as shown in Figure 6a).

By making use of a phonic wheel the rotor assembly 100 may be more easily retrofitted to an existing gas turbine engine already equipped with a phonic wheel to provide measurement of the rotor speed.

In the embodiment shown in Figure 5, the reference sensing apparatus 124 comprises a phonic wheel 128 also mounted to the rotor 102 (in this embodiment it is mounted to the shaft 108). The reference sensing apparatus 124 and the sensing apparatus 112 may be positioned at any suitable point along the axial length of the rotor 102. The phonic wheel 128 may be similar to that used for the sensing apparatus 112, and also comprises a peripheral array of teeth 128a and spaces 128b. In this embodiment, the reference sensing apparatus 124 also comprises a speed sensor 130 having a static mounting relative to the phonic wheel 128 and arranged to measure a clearance gap between them. In other embodiments, the reference sensing apparatus 124 may be of a different type, and may be different to the sensing apparatus 112.

In other embodiments, other forms of sensing apparatus may be used to provide a rotational signal that is indicative of the rotational speed of the rotor 102 at the measurement point 114 or the reference point 126. The sensing apparatus 112 or reference sensing apparatus 124 may, for example, comprise a camera or sound sensor arranged to provide a signal that allows the rotational speed of the rotor 102 to be determined. In one embodiment, the sensing apparatus may be a rotor blade counting sensor. This may allow the speed of rotation to be found by measuring the number of rotor blades passing a fixed point in a defined period of time. Other sensing apparatuses that provide a periodic signal, or other type of signal from which the rotational speed can be determined, may be used.

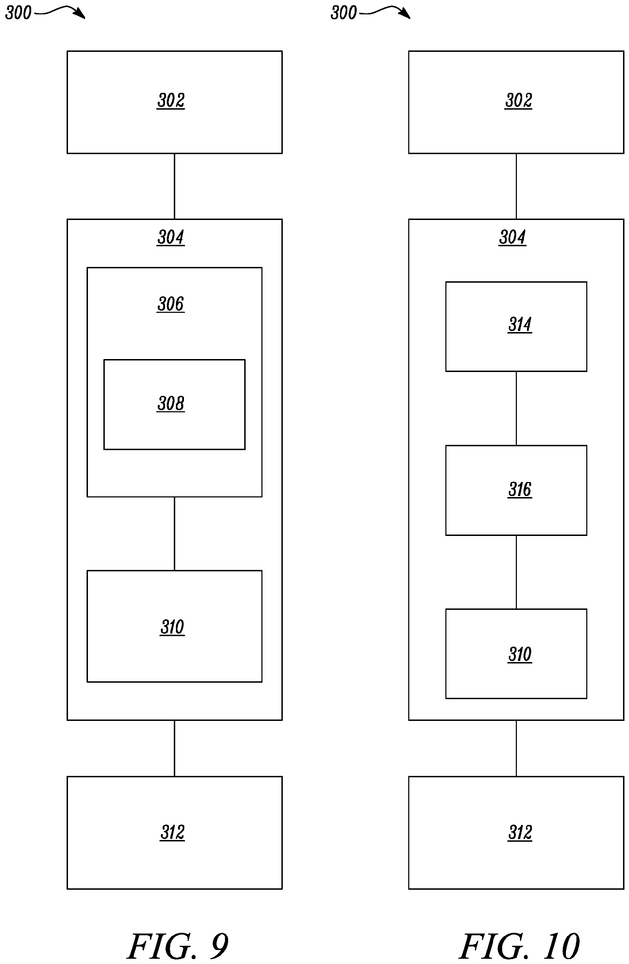

Also disclosed is a method 300 of detecting an object impact event on a rotor of a rotor assembly of a gas turbine engine. The method 300 is illustrated in **Figure 9****.** The method 300 may be carried out by the sensing apparatus 112 and the processor 118 of the rotor assembly 100 of any embodiment described herein. Any of the features described in connection with the rotor assembly 100 may apply equally to the method 300, and *vice versa.*

The method 300 comprises measuring 302 a rotational signal indicative of the rotational speed of the rotor 102. The rotational signal may be measured by the sensing apparatus 112. As discussed above, the rotational signal is measured at a measurement point 114 along the length of the rotor 102. The method 300 further comprises deriving 304 a rotor impact signal based on a measured offset in the rotational speed of the rotor 102. The rotor impact signal may be derived by the processor as discussed above.

The measured offset in the rotational speed of the rotor may be indicative of an offset in the rotation of the rotor 102 at different points along its length. As discussed above, the rotational offset may be caused by a twisting of the rotor 102.

The step of deriving 304 the rotor impact signal may comprise performing 306 a comparison of the rotation of the rotor, at the measurement point during an evaluation time period, to one or more evaluation parameters to determine the offset in the rotation. The one or more evaluation parameters may be an expected rotation of the rotor. The one or more evaluation parameters may include any one or more of:
a) a predefined expected rotation, or variation in rotation, of the rotor 102 at the measurement point 114 during normal running conditions in which no rotor impact event occurs;
b) a comparison value derived from data associated with the rotation of the rotor 102 over the evaluation time period. In one embodiment, the comparison value may be the average speed of rotation of the rotor over the evaluation time period. The rotational offset may then be based on the difference between the average rotation of the rotor 102 during the evaluation time period and the rotation of the rotor 102 at one or more measurement times within the evaluation time period; and
c) the rotation of the rotor 102 at the reference point 126.

As discussed above and shown in Figures 6a to 7b, the rotational signal may be a periodically varying signal. The frequency of the rotational signal may thus be proportional to the rotational speed of the rotor 102. Deriving 304 the rotor impact signal may be based on the wavelength of the rotational signal 200, 202, a change in which may be indicative of a rotor impact event as described above. Deriving the rotor impact signal may be based on reference points of the rotation signal 200, 202 such as zero crossings as described above.

The step of deriving 304 the rotor impact signal may comprise determining 306 a variation in a parameter of the rotational signal over the evaluation time period during which the rotational signal is measured.

The parameter may be any one or more of a period, reference point time interval or reference point position of the rotational signal. In order to determine 306 the variation in the parameter, the method 300 may comprise performing a comparison 308 to an expected parameter of the rotational signal. The expected parameter may be determined according to any one or more of:
a) a predefined expected period, reference point time interval or reference point position, of the rotational signal during normal running conditions;
b) a derived period, reference point time interval or reference point position of the measured rotational signal over the evaluation time period, wherein the derived period may be an average period; and
c) the period, reference point time interval or reference point position of the reference rotational signal.

The reference points may be zero crossings of the rotational signal as described above. In other embodiments, other suitable reference points can be used such as DC offset crossing points, maximum or minimum turning points etc.

Referring again to Figure 9, the step of deriving 304 the rotor impact signal may comprise performing 310 a threshold comparison. As discussed above, this may allow for a small offset in rotation of the rotor 102 which may occur during normal running conditions. The method further comprises a step of outputting 312 the rotor impact signal if the rotational offset exceeds a threshold rotational offset.

Another embodiment of the method 300 is illustrated in Figure 10. The method shown in Figure 10 includes corresponding steps to those of the embodiment shown in Figure 9, those steps being labelled accordingly. In the embodiment shown in Figure 10, the method 300 comprises calculating 314 a frequency domain representation of the rotational signal. Once the frequency domain representation has been calculated, the method 300 may further comprise comparing 316 the relative strength of a first frequency component of the frequency domain representation rotational signal to a second frequency component as described above. The frequency domain representation may be calculated by performing a Fourier transform calculation. Other methods of calculating the frequency domain representation may however be used.

It will be understood that the invention is not limited to the embodiments above-described and various modifications and improvements can be made without departing from the concepts described herein within the scope of the following claims. Except where mutually exclusive, any of the features may be employed separately or in combination with any other features and the disclosure extends to and includes all combinations and sub-combinations of one or more features described herein.

## Claims

1. A rotor assembly (100) for a gas turbine engine (10), comprising:
a rotor (102) comprising a plurality of rotor blades (104), wherein the rotor (102) is arranged to rotate about an axis of rotation (110);
a sensing apparatus (112) arranged to measure a rotational signal (200; 202) indicative of the rotational speed of the rotor (102) at a measurement point on the rotor (102); and
a processor (118) in communication with the sensing apparatus (112), the processor (118) arranged to receive the rotational signal (200; 202) and derive a rotor impact signal based on an offset in the measured rotational speed of the rotor (102) at the measurement point.
wherein the rotor (102) has an axial length (L) parallel to the axis of rotation (110), and wherein the sensing apparatus (112) is arranged to measure the rotational speed of the rotor (102) at a measurement point (114) along the axial length of the rotor, the measurement point corresponding to a position at or near an antinode of a torsional oscillation of the rotor resulting from an impact event.

2. A rotor assembly (100) according to claim 1, wherein the rotor blades (104) are disposed in a rotor blade plane (R) normal to the axis of rotation (110), and wherein the measurement point (114) is either one or both of:
at a point along the axial length (L) of the rotor (102) that lies in the rotor blade plane (R); and
at a point along the axial length (L) of the rotor (102) spaced apart from the rotor blade plane (R), and preferably wherein the measurement point (114) is spaced apart from the rotor blade plane (R) a distance corresponding to a position away from a node of a torsional oscillation caused by an impact event.

3. A rotor assembly (100) according to claim 1 or 2, wherein the processor (118) is arranged to perform a comparison of the measured rotation of the rotor (102), at the measurement point (114), to one or more evaluation parameters to determine the offset in the rotational speed of the rotor (102), and optionally wherein the one or more evaluation parameters include any one or more of:
a) a predefined expected rotation, or variation in rotation, of the rotor (102) at the measurement point (114) during normal running conditions in which no rotor impact event occurs;
b) a comparison value derived from data associated with the rotation of the rotor (102) over an evaluation time period in which the rotation of the rotor (102) is measured by the sensing apparatus (112), wherein the processor (118) is arranged to determine the rotational offset based on the difference between the rotation of the rotor (102) at one or more measurement times within the evaluation time period and the comparison value, wherein preferably the comparison value is an average speed of rotation of the rotor (102) over the evaluation time period; and
c) the rotation of the rotor (102) at a reference point (126), the reference point (128) being a point spaced apart along the axial length of the rotor (102) from the measurement point (114), wherein the rotor assembly (100) further comprises a reference sensing apparatus (124) in communication with the processor (118), the reference sensing apparatus (124) being arranged to measure a reference rotational signal at the reference point (126) indicative of the rotation of the rotor (102) at the reference point (126).

4. A rotor assembly (100) according to any preceding claim, wherein the rotational signal (200; 202) is a periodically varying signal, the frequency of the rotational signal (200; 202) being proportional to the rotational speed of the rotor (102), and optionally wherein the processor (118) is arranged to derive the rotor impact signal based on the wavelength of the rotational signal (200; 202) measured by the sensing apparatus (112).

5. A rotor assembly (100) according to claim 4, wherein the processor (118) is arranged to derive the rotor impact signal based on reference points of the rotational signal (200; 202) measured by the sensing apparatus (112), wherein optionally the reference points are zero crossings.

6. A rotor assembly (100) according to claim 4 or claim 5, wherein the processor (118) is arranged to derive the rotor impact signal based on a variation in a parameter of the periodic rotational signal (200; 202) over an evaluation time period during which the rotational signal (200; 202) is measured, wherein the parameter is any one or more of:
a period of the rotational signal (200; 202), a time interval between reference points of the rotation signal (200; 202) or a relative position of one or more reference points of the rotational signal (200; 202), wherein optionally the reference points are zero crossing points.

7. A rotor assembly (100) according to claim 6, wherein the processor (118) is arranged to perform a comparison with an expected parameter of the rotational signal in order to determine a variation in the parameter of the rotational signal (200; 202) measured by the sensing apparatus (112), wherein the expected parameter is determined according to any one or more of:
a) a predefined expected period, reference point time interval or reference point position, of the rotational signal (200; 202) during normal running conditions;
b) a derived period, reference point time interval or reference point position of the measured rotational signal over the evaluation time, wherein optionally the derived period is an average period over the evaluation time; and
c) the period, reference point time interval or reference point position of a reference rotational signal measured by a reference sensing apparatus (124) arranged to measure a reference rotational signal at a reference point (126) along the rotor (102) spaced apart from the sensing apparatus (112).

8. A rotor assembly (100) according to any one of claims 4 to 7, wherein deriving the rotor impact signal by the processor (118) comprises calculating a frequency domain representation of the rotational signal (200; 202), and optionally wherein:
deriving the rotor impact signal by the processor further comprises comparing the relative strength of a first frequency component (204) of the frequency domain representation of the rotational signal to a second frequency component of the frequency domain representation of the rotational signal (206, 208).

9. A rotor assembly (100) according to any preceding claim, wherein deriving the rotor impact signal by the processor (118) comprises performing a threshold comparison, wherein the rotor impact signal is output if the rotational offset exceeds a threshold rotational offset.

10. A rotor assembly (100) according to any preceding claim, wherein the sensing apparatus (112) comprises:
a phonic wheel (120) coupled to the rotor (102) and a speed sensor (122) in a stationary alignment relative to the phonic wheel (120), wherein the speed sensor (122) is arranged to measure a voltage that is proportional to the clearance between the speed sensor (122) and the phonic wheel (120); or
a rotor blade counting sensor arranged to measure the rotational signal based on a number of rotor blades passing a fixed point in a defined period of time.

11. A method (300) of detecting an object impact event on a rotor (102) of a rotor assembly (100) of a gas turbine engine (10), the method comprising the steps of:
measuring (302) a rotational signal (200; 202) indicative of the rotational speed of a rotor (102) comprising a plurality of rotor blades (104), the rotational signal (200; 202) being measured at a measurement point (114) on the rotor (102); and
deriving (304) a rotor impact signal based on an offset in the measured rotational speed of the rotor (102);
the rotor (102) being arranged to rotate about an axis of rotation (110) and the rotor (102) has an axial length (L) parallel to the axis of rotation (110), and wherein measuring (302) the rotational signal comprises measuring the rotational speed of the rotor (102) at a measurement point (114) along the axial length of the rotor, the measurement point corresponding to a position at or near an antinode of a torsional oscillation of the rotor resulting from an impact event.

12. A method (300) according to claim 11, wherein the rotor blades (104) are disposed in a rotor blade plane (R) normal to the axis of rotation (110), and wherein the measurement point (114) is either one or both of:
at a point along the axial length (L) of the rotor (102) that lies in the rotor blade plane (R); and
at a point along the axial length (L) of the rotor (102) spaced apart from the rotor blade plane (R), and preferably wherein the measurement point (114) is spaced apart from the rotor blade plane (R) a distance corresponding to a position away from a node of a torsional oscillation caused by an impact event.

13. A method (300) according to claim 11 or 12, wherein deriving (304) the rotor impact signal comprises performing (306) a comparison of the rotation of the rotor (102), at the measurement point (114), to one or more evaluation parameters to determine the offset in the rotation, and optionally wherein:
the one or more evaluation parameters include any one or more of:
a) a predefined expected rotation, or variation in rotation, of the rotor (102) at the measurement point (114) during normal running conditions in which no rotor impact event occurs;
b) a comparison value derived from data associated with the rotation of the rotor (102) measured over an evaluation time period, wherein the rotational offset is determined based on the difference between the rotation of the rotor (102) at one or more measurement times within the evaluation time period and the comparison value, wherein preferably the comparison value is an average speed of rotation of the rotor (102) over the evaluation time period; and
c) the rotation of the rotor (102) at a reference point (126), the reference point (126) being a point spaced apart along the length of the rotor (102) from the measurement point (114).

14. A method (300) according to any one of claims 11 to 13, wherein the rotational signal (200; 202) is a periodically varying signal, the frequency of the rotational signal (200; 202) being proportional to the rotational speed of the rotor (102), and wherein optionally the rotor impact signal is derived (304) based on the wavelength of the rotational signal (200; 202) and further optionally
wherein the rotor impact signal is derived (304) based on reference points of the rotational signal (200; 202), wherein optionally the reference points are zero crossing points.

15. A method (300) according to claim 14, wherein deriving (304) the rotor impact signal comprises determining (306) a variation in a parameter of the periodic rotational signal (200; 202) over an evaluation time period during which the rotational signal is measured, wherein the parameter is any one or more of:
a period of the rotational signal (200; 202), a reference point time interval between reference points of the rotation signal (200; 202) or a relative position of one or more reference points of the measured rotational signal (200; 202).
